# EUROPEAN PATENT SPECIFICATION

(11) **EP 1 262 987 B1**
(45) Date of publication and mention of the grant of the patent: **27.07.2005**
(21) Application number: 02253188.3
(22) Date of filing: 07.05.2002
(51) Int. Cl.: G11B 33/08

(54) **Vibration absorbing mechanism**
Schwingungsdämpfender Mechanismus
Mécanisme amortissant les vibrations

(30) Priority: 28.05.2001 JP 2001158389
(43) Date of publication of application: 04.12.2002
(73) Proprietor: Pioneer Corporation, Meguro-ku, Tokyo (JP)
(72) Inventor: Kadowaki, Takeshi, Pioneer Electronic Corp., Tokorozawa-shi, Saitama (JP); Hoshinaka, Eiji, Pioneer Electronic Corp., Tokorozawa-shi, Saitama (JP); Konno, Youichi, Pioneer Electronic Corp., Tokorozawa-shi, Saitama (JP); Ishii, Katsumi, Pioneer Electronic Corp., Tokorozawa-shi, Saitama (JP)
(74) Representative: Haley, Stephen

(56) References cited:
- EP-A- 0 884 731
- US-A- 5 884 892
- PATENT ABSTRACTS OF JAPAN vol. 018, no. 432 (M-1654), 11 August 1994 (1994-08-11) -& JP 06 129488 A (TOKAI RUBBER IND LTD), 10 May 1994 (1994-05-10)
- PATENT ABSTRACTS OF JAPAN vol. 010, no. 034 (P-427), 8 February 1986 (1986-02-08) -& JP 60 182086 A (HITACHI SEISAKUSHO KK), 17 September 1985 (1985-09-17)

## Description

The present invention relates to a vibration absorbing mechanism, and more particularly to a vibration absorbing mechanism that is suitably applied to a recording/reproducing device having a vibration isolating mechanism to isolate the vibration produced by a spindle and a recording medium such as an optical disk mounted on the spindle when rotated.

Conventionally, a recording/reproducing device using a recording medium rotating at high speed is employed in a computer or various players. For instance, an optical disk reproducing device for reproducing an optical disk such as a CD (Compact Disk) player (including a CD-ROM drive) or a DVD (Video Disk) player is widely employed.

An optical system or servo system in this optical disk reproducing device has a limited ability of making the accurate track control and focusing control against the vibration applied from the outside of the device or produced by the device itself. Especially when it is employed for a storage device in the computer, the vibration produced by the device itself to speed up a drive unit for fast reading or seeking becomes an important problem.

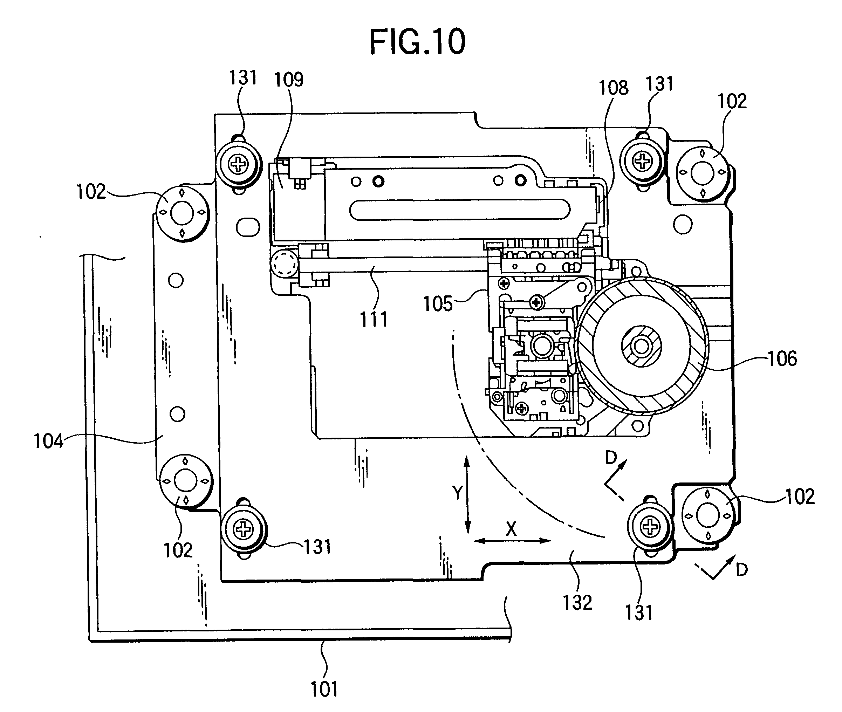

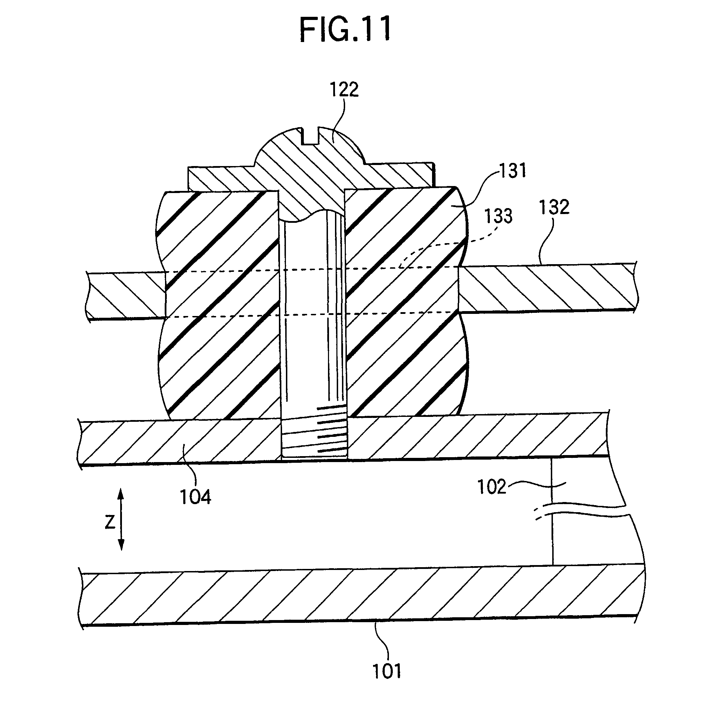

Therefore, a structure is generally employed in which an entire mechanism or a reproducing mechanism (optical system mechanism) is supported by an elastic member, and an external vibration is attenuated by the internal resistance of its elastic member. Also, another structure for attenuating the vibration produced by the device itself is employed. This vibration attenuating structure is shown in Figs. 10 and 11.

Figs. 10 and 11 show a CD player as one example of the device having a structure for attenuating the external vibration and internal vibration. Fig. 10 is a schematicplan view showing the internal structure of a CD player, and Fig. 11 is a cross-sectional view of a portion of the CD player taken along the line D-D in Fig. 10.

As shown in Fig. 10, a main frame 104 is resiliently supported via the first elastic members 102 (four elastic members shown in the figure) on a housing 101. Also, a sub-frame 132 is attached via the second elastic members 131 on the main frame 104. On this main frame 104, a drive system with a spindle motor having a turntable 106 for rotating an optical disk 10 (indicated by the imaginary line) is mounted.

A connection structure between this sub-frame 132 and the main frame 104 is such that the sub-frame 132 is fixed to the main frame 104 by a screw 122 with which a second elastic member 131 is engaged with the main frame 104, in which an outer circumferential face 131a of this second elastic member 131 is constrained by a mounting hole 133 of the sub-frame 132, as shown in Fig. 11.

The main frame 104 is provided with two guide rails 111 (only one shown) parallel to each other. A pickup 105 engaging the guide rails 111 is disposed to be movable along the guide rails 111 in a radial direction of the optical disk. This pickup 105 is engaged by a drive screw 108 connected to a stepping motor 109 and can be moved in the radial direction of the optical disk.

In this structure, the vibration produced by the device itself can be suppressed by a vibration suppressing structure using the sub-frame 132 that is dynamic vibration absorbing member.

However, in the conventional vibration suppressing structure as above described, the resonance frequency is set in such a way as to increase or decrease the clamping force of the screw 122 to change a restraint of the second elastic member 131 between the screw 122 and the main frame 104, and change an abutment force (force of the mounting hole constraining the elastic member) of the outer circumferential face 131a of the second elastic member 131 against the mounting hole 133. In the present state of affairs, by such a screw clamping operation, the resonance frequency is tuned in respect of any one of a focus direction (vertical direction to the surface of the optical disk, or direction of the arrow Z in the figure), a track direction (rotational direction of the optical disk as indicated by the arrow Y in the figure), a tangential direction (radial direction of the optical disk as indicated by the arrow X in the figure) to produce the vibration suppressing effect, resulting in a highly empirical adjustment operation.

Therefore, if the vibration suppressing effect is easily obtained in a specific direction or a plurality of directions, the vibration suppressing action can be minutely adjusted in various types of devices, enabling the fast reading (writing) and promoting the miniaturization and lighter weight of the device. However, with the prior art, it was very difficult to set the vibration suppressing effect in a plurality of directions.

A recording/reproducing device with a vibration absorbing mechanism is described by document EP884731, it comprises:
- a drive member,
- an optical pickup,
- a mount member for mounting the drive member and the optical pickup,
the vibration absorbing mechanism comprises:
- a dynamic vibration absorbing member connected to said mount member via an elastic member for attenuating the vibration of said mounting member.

The present invention is achieved in the light of the above problems, and it is an object of the invention to provide a vibration absorbing mechanism for suppressing the vibration caused by drive member in a recording/reproducing device for a recording medium such as an optical disk, in which the vibration suppressing effect can be easily obtained in a plurality of directions, and the fast reading (writing) can be made more stably than conventionally.

According to a first aspect of the present invention, there is provided a vibration absorbing mechanism comprising the features of claim 1.

In this manner, with the vibration absorbing mechanism according to the first aspect of the invention, the mount member and the dynamic vibration absorbing member are linked via the elastic member, so that the vibration produced by a drive system mounted on the mount member can be suitably attenuated. In a state that the wall face of the dynamic vibration absorbing member constraining the outer circumferential face of the elastic member and the elastic member are connected, a decrease or increase in the restraint can be partially produced in an area of the elastic member constrained by the wall face, where the restraint changing member is provided. Hence, the resonance frequency can be varied in the specific direction, depending on the position at which the restraint changing member is formed.

According to a second aspect of the invention, there is provided the vibration absorbing mechanism, characterized in that the dynamic vibration absorbing member is provided with a mounting hole for accepting the elastic member, and the restraint changing member is a concave portion of the mounting hole on the wall face.

With the vibration absorbing mechanism according to the second aspect of the invention, the wall face of the mounting hole formed in the dynamic vibration absorbing member is contacted with the circumference of the elastic member, so that the mount member and the dynamic vibration absorbing member are resiliently connected. Furthermore, the concave portion formed on the wall face of the mounting hole weakens or releases the restraint of the elastic member, thereby acting as the restraint changing member for weakening the restraint in the concave portion, and making it possible to vary the resonance vibration frequency in a direction where the restraint is weakened.

According to a third aspect of the invention, there is provided the vibration absorbing mechanism, characterized in that the dynamic vibration absorbing member is provided with a mounting hole for accepting the elastic member, and the restraint changing member is a projection portion of the mounting hole on the wall face.

With the vibration absorbing mechanism according to the third aspect of the invention, the wall face of the mounting hole formed in the dynamic vibration absorbing member is contacted with the circumference of the elastic member, so that the mount member and the dynamic vibration absorbing member are resiliently connected. Furthermore, the projection portion formed on the wall face of the mounting hole acts as the restraint changing member for partially restraining the surface of the elastic member strongly, making it possible to vary the resonance vibration frequency in a specific direction where the restraint is strengthened.

According to a fourth aspect of the invention, there is provided the vibration absorbing mechanism, characterized in that the dynamic vibration absorbing member is provided with a mounting hole for accepting the elastic member, and the restraint changing member is a recessed portion of the elastic member.

With the vibration absorbing mechanism according to the fourth aspect of the invention, the elastic member is accepted in the mounting hole formed in the dynamic vibration absorbing member and constrained by the wall face of the mounting hole, so that the mount member and the dynamic vibration absorbing member are resiliently connected. Furthermore, the recessed portion of the elastic member can weaken or release the restraint of the elastic member, acting as the restraint changing member that weakens the restraint in the recessed portion, making it possible to vary the resonance vibration frequency in a specific direction where the restraint is weakened.

According to a fifth aspect of the invention, there is provided the vibration absorbing mechanism, characterized in that the dynamic vibration absorbing member is provided with a mounting hole for accepting the elastic member, and the restraint changing member is an elastic projection portion of the elastic member.

With the vibration absorbing mechanism according to the fifth aspect of the invention, the wall face of the mounting hole formed in the dynamic vibration absorbing member is contacted with the circumference of the elastic member, so that the mount member and the dynamic vibration absorbing member are resiliently connected. Furthermore, the elastic projection portion formed on the outer circumferential face of the elastic member acts as the restraint changing member for partially restraining the elastic member itself strongly, making it possible to vary the resonance vibration frequency in a specific direction where the restraint is strengthened.

According to a sixth aspect of the invention, there is provided the vibration absorbing mechanism according to the fourth or fifth aspect of the invention, characterized in that the elastic member is almost cylindrical, in which a fixing direction of he elastic member to the mount member is selectable by a fixing member passing through a central portion.

With the vibration absorbing mechanism according to the sixth aspect of the invention, the elastic member is almost cylindrical, and attached by the fixing member passing through the central portion, whereby the fixing direction of the elastic member to the mount member is selectable. Hence, the position of restraint changing member formed in the elastic member can be chosen so that the resonance vibration frequency can be varied at will in the direction.

### In the Drawings:

Fig. 1 is a schematic plan view showing the internal structure of an optical disk reproducing device having a vibration absorbing mechanism according to a first embodiment of the present invention.
Fig. 2 is an exploded perspective view of an essential part of the optical disk reproducing device according to the first embodiment of the invention.
Fig. 3 is a schematic cross-sectional view of the optical disk reproducing device according to the first embodiment of the invention, taken along the line A-A in Fig. 1.
Fig. 4 is a schematic cross-sectional view of the optical disk reproducing device according to the first embodiment of the invention, taken along the line B-B in Fig. 1.
Fig. 5 is a perspective view of an essential part of the optical disk reproducing device according to a second embodiment of the invention.
Fig. 6 is a perspective view of an essential part of the optical disk reproducing device according to a third embodiment of the invention.
Fig. 7 is a perspective view of an essential part of the optical disk reproducing device according to a fourth embodiment of the invention.
Fig. 8 is a perspective view of an essential part of the optical disk reproducing device according to a fifth embodiment of the invention.
Fig. 9 is a perspective view of an elastic member according to a sixth embodiment of the invention.
Fig. 10 is a schematic plan view showing the internal structure of the conventional optical disk reproducing device.
Fig. 11 is a schematic cross-sectional view of a portion of the conventional optical disk reproducing device, taken along the line D-D in Fig. 10.

### (First Embodiment)

An optical disk reproducing device having a vibration absorbing mechanism according to the present invention will be described below with reference to the accompanying drawings.

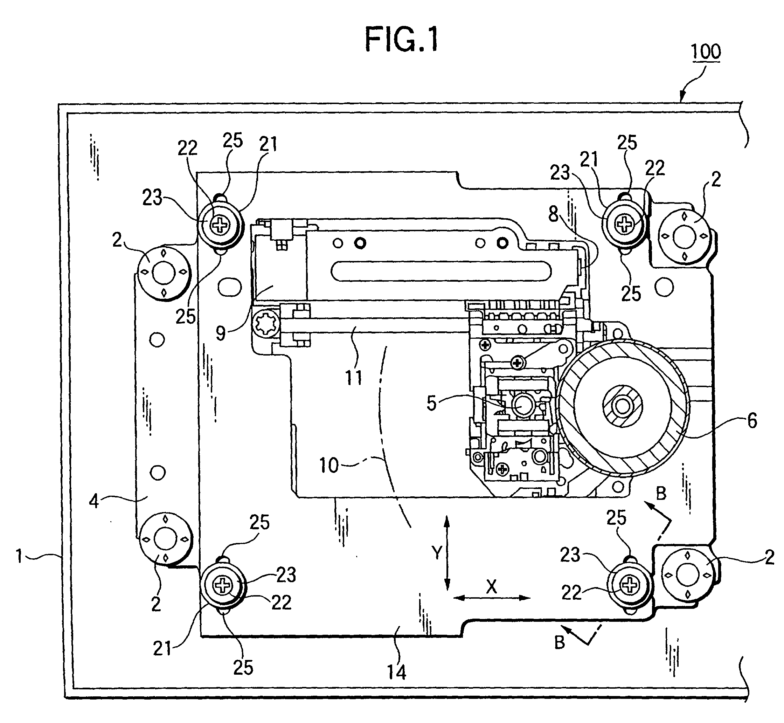

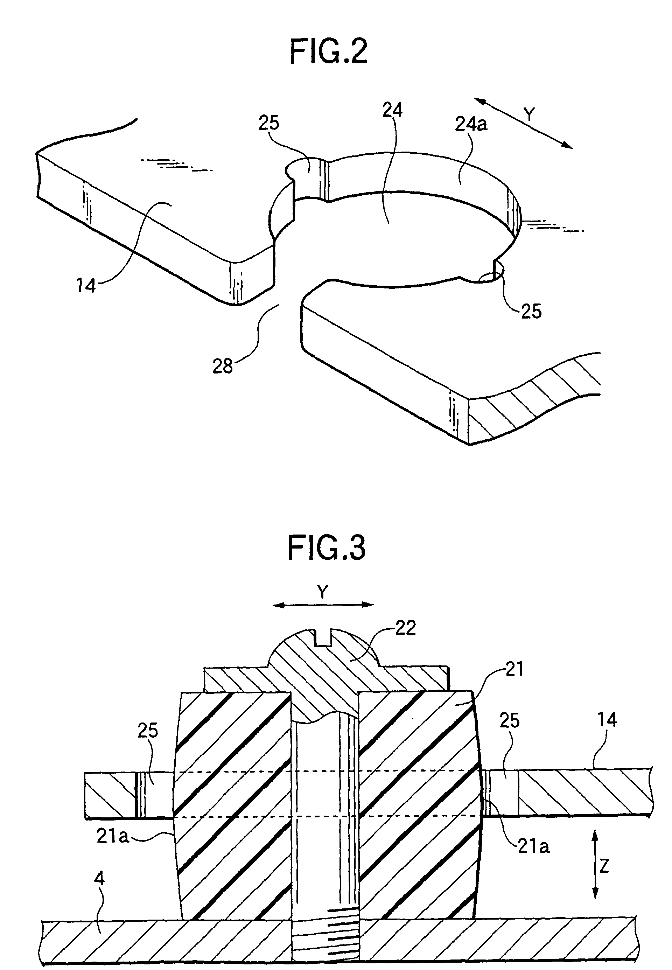

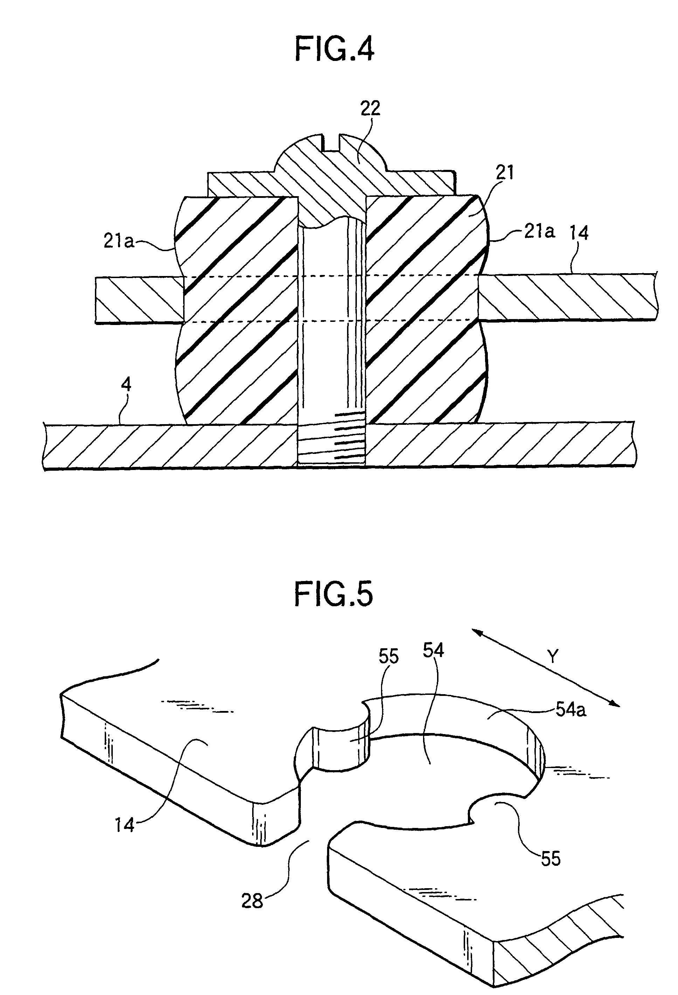

Fig. 1 is a schematic plan view showing an internal structure of an optical disk reproducing device having a vibration absorbing mechanism according to the invention. Fig. 2 is an exploded perspective view of an essential part of the optical disk reproducing device. Fig. 3 is a schematic cross-sectional view of a portion of the optical disk reproducing device, taken along the line A-A in Fig. 1. Fig. 4 is a schematic cross-sectional view of a portion of the optical disk reproducing device, taken along the line B-B in Fig. 1.

In the optical disk reproducing device 100 according to a first embodiment of the invention as shown in Fig.1, a main frame 4 that is mount member mounting a reproducing mechanism (optical mechanism) is supported within a rectangular housing 1 by four first elastic members 2, for example. Owing to an internal resistance of this first elastic member 2, an external vibration applied onto the main frame 4 from the outside of the housing 1 can be attenuated.

The main frame 4 has a spindle motor as drive member having a turntable 6 for rotating an optical disk 10 (only partially indicated by the imaginary line) that is an information recording medium (at a position under the turntable 6 in Fig. 1), and a pickup 5 that is information reading member for reading the information written into the optical disk 10.

A sub-frame 14 as dynamic vibration absorbing member is attached via four second elastic members 21, for example, on the main frame 4.

A connection structure between the sub-frame 14 and the main frame 4 is such that the sub-frame 14 is fixed to the main frame 4 by an attaching screw 22 with which a second elastic member 21 is engaged with the main frame 4, and an outer circumferencial face 21a of the second elastic member 21 (see Fig. 4) and a wall face 24a on the inner circumference of a mounting hole 24 of the sub-frame 14 (see Fig. 2) are contacted, whereby the main frame 4 and the sub-frame 14 are resiliently connected, as shown in Figs. 2, 3 and 4.

A feature of the vibration absorbing mechanism in the first embodiment is that two concave portions 25, 25 are formed on the wall face 24a of the mounting hole 24. The two concave portions 25, 25 are arranged oppositely in the so-called track direction along the direction of the arrow Y in Fig. 2. The mounting hole 24 is formed with an insertion notch 28 for inserting the second elastic member 21, as required.

In the vibration absorbing mechanism thus constituted, the main frame 4 and the sub-frame 14 are resiliently connected when the wall face 24a of the mounting hole 24 formed in the sub-frame 14 is contacted with the outer circumferential face 21a of the elastic member 21. Furthermore, with the concave portions 25, 25 formed on the wall face 24a of the mounting hole 24, a restraint of the elastic member 21 in the concave portions 25, 25 is significantly weakened, or released. Accordingly, the concave portions 25, 25 act as restraint changing member for weakening the restraint for the elastic member 21. As a result, the resonance vibration frequency can be changed in the direction determined by the positions of the concave portions 25, 25.

The main frame 4 has two guide rails 11 (only one shown in the figure because the other is located under the sub-frame) parallel to each other. The pickup 5 is movably engaged in the guide rails 11. Accordingly, the pickup 5 can be moved in a radial direction of the optical disk 10 along the guide rails 11.

Further, the pickup 5 has one end engaged by a drive screw 8. Also, the drive screw 8 has its one end connected to the stepping motor 9. With this constitution, the pickup 5 is moved in the radial direction of the optical disk 10 up to a predetermined track.

That is, if the drive screw 8 is rotated by rotational drive of the stepping motor 9, the pickup 5 can be moved in the radial direction of the optical disk. The movement direction of the pickup 5 is determined by the rotation direction of the stepping motor 9.

In the optical disk reproducing device 100 thus constituted, when an external vibration is applied to the housing 1, the vibration is prevented from being transmitted to the main frame 4 due to the action of the first elastic members 2, because the main frame 4 is resiliently supported via the first elastic member 2 against the housing 1.

On the other hand, if the optical disk 10 is rotated, the main frame 4 vibrates due to imbalance of the optical disk 10 that is rotated by the spindle motor. The vibration of this main frame 4 is transmitted via the second elastic members 21 to the sub-frame 14. Consequently, the sub-frame 14 vibrates in accordance with the transmission characteristics of the second elastic members 21.

The sub-frame 14 is moved together with the main frame 4 at the vibration frequency fully lower than the resonance frequency of both vibration systems, while the sub-frame 14 has almost no vibration transmitted from the main frame 4 at the vibration frequency sufficiently higher than the resonance frequency.

Near the resonance frequency, a phase difference in the transmitted vibration is: in phase at the vibration frequency sufficiently lower than the resonance frequency, in opposite phase at the vibration frequency sufficiently higher than the resonance frequency, and out of phase of 90 degrees at the resonance frequency.

Using the phase characteristic, especially the opposite phase, the vibration can be greatly reduced by making the phase opposite near the frequency for suppressing the vibration.

A way of adjusting the resonance frequency involves selecting the material of the second vibration members 21. By selecting the material of the second vibration members 21, the spring constant of the resonance system is changed, whereby the resonance frequency can be adjusted. If the material is varied, the spring constant is changed in any direction, but to adjust the spring constant in a specific direction, a clamping force by the attaching screw 22 may be changed. If the clamping force of the attaching screw 22 is reduced, the resonance frequency in an axial direction of the attaching screw is lower, but inversely, if the clamping force is increased, the resonance frequency is higher.

And the sub-frame 14 produces an appropriate vibration suppressing effect by adjusting the resonance frequency.

Herein, in the vibration absorbing mechanism of the first embodiment, the restraint for the elastic members 21 is weakened only in the direction in which the concave portions 25, 25 are arranged (track direction), thereby making it possible to adjust the resonance vibration frequency in the track direction independently of the other directions. That is, the resonance vibration frequency in the track direction can be only adjusted depending on the depth or size of the concave portions 25, 25. In this embodiment, the substantial restraint in the track direction in which the concave portions 25, 25 are formed can be reduced, whereby the resonance vibration frequency can be set at lower value.

Also, the resonance vibration frequency in the focus direction (direction of the arrow Z) can be tuned by adjusting the clamping force of the attaching screw 22.

In this manner, the resonance frequency in both the focus and track directions can be adjusted purposely in this embodiment. Consequently, the dynamic vibration absorbing mechanism using the sub-frame 14 can adjust the resonance vibration frequency in different directions excellently, fulfilling favorable dynamic vibration absorbing action. Therefore, the optical disk 10 can be correctly read by the pickup 5 even at fast rotation of the optical disk 10.

### (Second embodiment)

Referring to Fig. 5, an optical disk reproducing device having a vibration absorbing mechanism according to a second embodiment of the invention will be described below in detail.

Fig. 5 is a perspective view of a mounting hole 54 of the sub-frame 14 in the optical disk reproducing device, showing the same portion as described in the first embodiment and shown in Fig. 2. The second embodiment has the same constitution as the first embodiment, except for a portion as shown in Fig. 5, and there is no description except for the characteristic portion of the second embodiment.

In the second embodiment, like the first embodiment, the sub-frame 14 is provided with the mounting hole 54 for accepting the cylindrical elastic member 21 (see Fig. 4). And a pair of projections 55, 55 as restraint changing member are formed on a wall face 54a of the mounting hole 54.

The pair of projections 55, 55 are arranged oppositely along the track direction (direction of the arrow Y in the figure). Thus, when the wall face 54a of the mounting hole 54 formed on the sub-frame 14 is contacted with the outer circumferential face 21a (see Fig. 4) of the elastic member 21, the main frame 4 and the sub-frame 14 are resiliently connected, whereby the projections 55, 55 press (constrain) the surface 21a of the elastic member 21 more strongly than the other wall face 54a. Accordingly, the restraint is stronger in the track direction than the other directions in the second embodiment, whereby the resonance vibration frequency in this track direction can be changed. The restraint can be adjusted by changing the height or size of the projections 55, 55.

In this second embodiment, the substantial restraint can be increased in the track direction in which the projections 55, 55 are formed, and the resonance vibration frequency can be set at higher value in the track direction than the other directions.

### (Third embodiment)

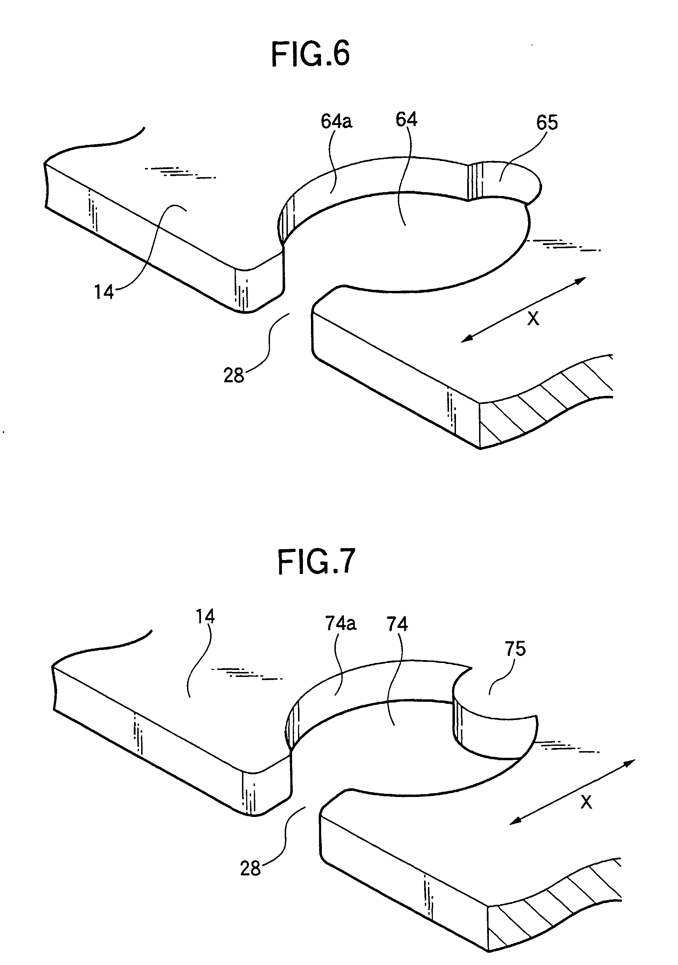

Referring to Fig. 6, an optical disk reproducing device having a vibration absorbing mechanism according to a third embodiment of the invention will be described below in detail. Fig. 6 is a perspective view of a mounting hole 64 of the sub-frame 14 in the optical disk reproducing device, showing the same portion as described in the first embodiment and shown in Fig. 2.

The third embodiment has the same constitution as the first embodiment, except for a portion as shown in Fig. 6, and there is no description except for the characteristic portion of the third embodiment.

In the third embodiment, the sub-frame 14 is provided with the mounting hole 64 for accepting the cylindrical elastic member 21 (see Fig. 4). A concave portion 65 is formed at an opposite position of the insertion notch 28 on a wall face 64a of the mounting hole 64.

Thus, due to the concave portion 65, when the wall face 64a of the mounting hole 64 is contacted with the outer circumferential face 21a of the elastic member 21, the main frame 4 and the sub-frame 14 are resiliently connected, whereby the concave portion 65 and the insertion notch 28 partially weaken or release the clamping force onto the surface 21a of the elastic member 21 (if the concave portion 65 is so large that the wall face 64a of the mounting hole 64 is not contacted with the outer circumferential face 21a of the elastic member 21, the restraint of the elastic member 21 against the wall face 64a is partially released.)

Accordingly, the restraint is weaker in the tangential direction (direction of the arrow X in Fig. 6), whereby the resonance vibration frequency in this tangential direction can be changed. The restraint can be adjusted by changing the height or size of the concave portion 65.

In this third embodiment, the substantial restraint can be decreased in the tangential direction in which the concave portion 65 is formed, and the resonance vibration frequency can be set at lower value in the tangential direction than the other directions.

### (Fourth embodiment)

Referring to Fig. 7, an optical disk reproducing device having a vibration absorbing mechanism according to a fourth embodiment of the invention will be described below in detail. Fig. 7 is a perspective view of amounting hole 74 of the sub-frame 14 in the optical disk reproducing device, showing the same portion as described in the first embodiment and shown in Fig. 2. The fourth embodiment has the same constitution as the first embodiment, except for a portion as shown in Fig. 7, and there is no description except for the characteristic portion of the fourth embodiment.

In the fourth embodiment, like the first embodiment, the sub-frame 14 is provided with the mounting hole 74 for accepting the cylindrical elastic member 21 (see Fig. 4). A projection 75 as restraint changing member is provided on a wall face 74a of the mounting hole 74.

The projection 75 is disposed at an opposite position of the insertion notch 28. Accordingly, when the wall face 54a of the mounting hole 54 formed in the sub-frame 14 is contacted with the outer circumferential face 21a of the elastic member 21 (see Fig. 4), the main frame 4 and the sub-frame 14 are resiliently connected, whereby the projection 75 presses (constrains) the surface 21a of the elastic member 21 more strongly than the other wall face 74a.

In this manner, in the fourth embodiment, the restraint is stronger in the tangential direction (direction of the arrow X in Fig. 7), whereby the resonance vibration frequency in this tangential direction can be changed.

In the fourth embodiment, the projection 75 that is disposed at an opposite position of the insertion notch 28 has a function of making up for a decrease in the restraint for a portion of the insertion notch 28 in the tangential direction. Also, the adjustment of the restraint by the use of the projection 75 can be easily made by changing the height or size of the projection 75.

In this fourth embodiment, the substantial restraint can be increased in the tangential direction in which the projection 75 is formed, and the resonance vibration frequency can be set substantially at higher value in the tangential direction than the other directions.

### (Fifth embodiment)

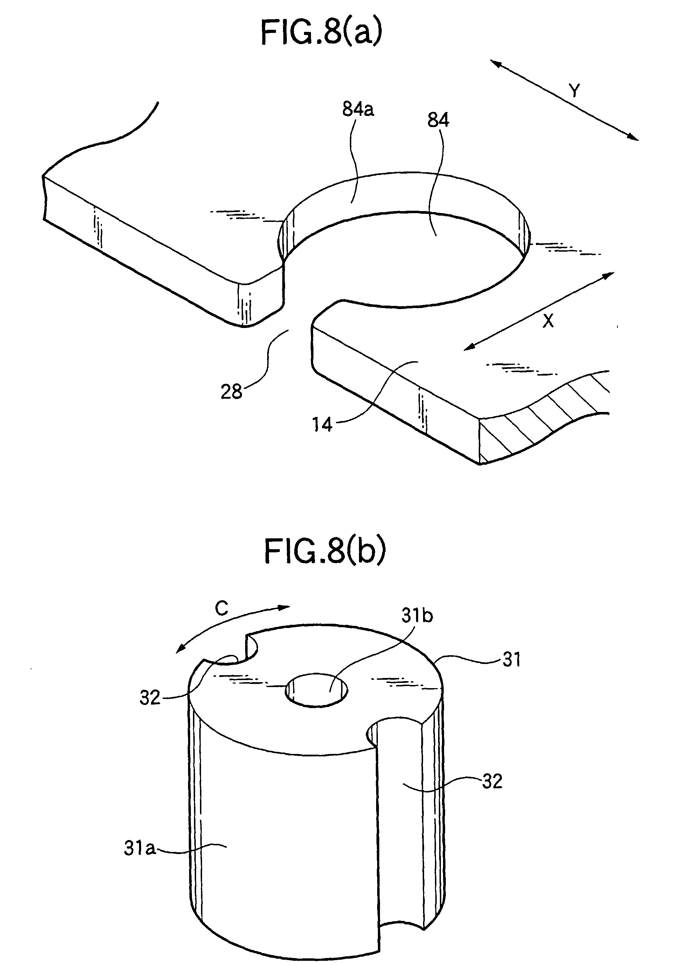

Referring to Fig. 8, an optical disk reproducing device having a vibration absorbing mechanism according to a fifth embodiment of the invention will be described below in detail. Fig. 8Ais a perspective view of amounting hole 84 of the sub-frame 14 in the optical disk reproducing device and Fig. 8B is a perspective view of an elastic member.

The fifth embodiment has the same constitution as the first embodiment, except for a portion as shown in Fig. 8, and there is no description except for the characteristic portion of the fifth embodiment.

In the fifth embodiment, the sub-frame 14 is provided with the mounting hole 84 for accepting the elastic member 31, a wall face 84a of the mounting hole 84 being smooth circular except for a portion of the insertion notch 28, as shown in Fig. 8A. On the other hand, the elastic member 31 is almost cylindrical, and centrally formed with a bore 31b for passing the attaching screw 22 that is a fixing member (see Fig. 4), with the recessed portions 32, 32 being provided along the axial direction of the elastic member 31 and at symmetrical positions with respect to the bore 31b on an outer circumferential face 31a, as shown in Fig. 8B.

With the above constitution, when the wall face 84a of the mounting hole 84 is contacted with the outer circumferential face 31a of the elastic member 31, the main frame 4 and the sub-frame 14 are resiliently connected. In this connection state, the recessed portions 32, 32 can partially weaken or release a clamping pressure against the wall face 84a of the mounting hole 84. Also, the elastic member 31 is fixed via the attaching screw 22 and a flat plate 23 to the main frame 4. At the time of fixation, the recessed portions 32, 32 can be directed arbitrarily as desired by rotating the elastic member 31 (in the direction of the arrow C in Fig. 8B).

Accordingly, in the fifth embodiment, the restraint can be weakened in all directions, including the track direction and the tangential direction, whereby the resonance vibration frequency can be suitably selected.

### (Sixth embodiment)

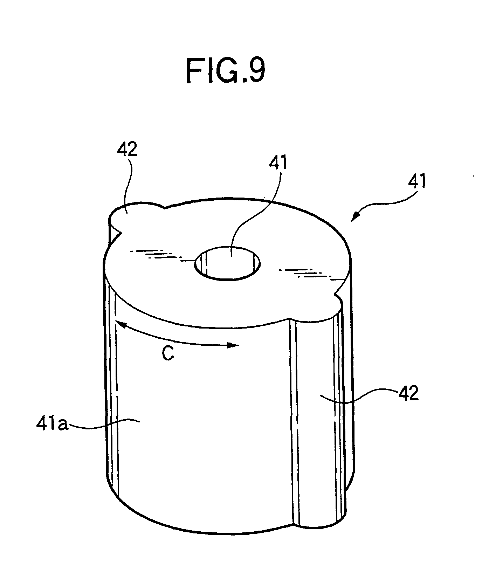

Referring to Fig. 9, an optical disk reproducing device having a vibration absorbing mechanism according to a sixth embodiment of the invention will be described below in detail. Fig. 9 is a perspective view of an elastic member.

The sixth embodiment has the same constitution as the fifth embodiment, except for a portion as shown in Fig. 9, and there is no description except for the characteristic portion of the sixth embodiment.

In the sixth embodiment, the elastic member 41 is almost cylindrical, and centrally formed with a bore 41b for passing the attaching screw 22 (see Fig. 4), with the elastic projections 42, 42 being provided along the axial direction of the elastic member 41 and at symmetrical positions with respect to the bore 41b on an outer circumferential face 41a.

With the above constitution, in the state where the main frame 4 and the sub-frame 14 are resiliently connected, the elastic projections 42, 42 allow the clamping pressure against the wall face 84a of the mounting hole 84 to be partially strengthened, as shown in Fig. 9. Also, the elastic member 41 is fixed via the attaching screw 22 and a flat plate 23 that are fixing members to the main frame 4. At the time of fixation, the elastic projections 42, 42 can be directed arbitrarily as desired by rotating the elastic member 41 (in the direction of the arrow C in Fig. 9).

Accordingly, in the sixth embodiment, the restraint can be strengthened in all directions, including the track direction and the tangential direction, whereby the resonance vibration frequency can be suitably selected. Also, the adjustment of the restraint by the use of the elastic projections 42, 42 can be easily made by changing the height or size of the elastic projections 42, 42.

In the above embodiments, the mounting hole 24, 54, 64, 74, 84 provided on the sub-frame 14 is formed with the insertion notch 28 for inserting the second elastic member 21, 31, 41. In this invention, however, the insertion notch 28 may not be formed.

Also, in the above embodiments, the vibration absorbing mechanism according to the invention is applied to the optical disk reproducing device. However, the vibration absorbing mechanism according to the invention can be widely applied to the recording/reproducing device using the recording medium such as a CD (Compact Disk) player (including a CD-ROM drive) and a DVD (Video Disk) player and other various kinds of recording medium.

As described above, with the vibration absorbing mechanism according to the first aspect of the invention, the mount member and the dynamic vibration absorbing member are linked via the elastic member, so that the vibration produced by a drive system mounted on the mount member can be suitably attenuated. In a state that the wall face of the dynamic vibration absorbing member constraining the outer circumferential face of the elastic member and the elastic member are connected, a decrease or increase in the restraint can be partially produced in an area of the elastic member constrained by the wall face, where the restraint changing member is provided. Hence, the resonance frequency can be varied in the specific direction, depending on the position at which the restraint changing member is formed, whereby the vibration suppressing effect can be obtained in a plurality of directions. Thereby, the vibration absorbing mechanism can be provided to allow the fast reading (writing) to be made more stably than conventionally.

With the vibration absorbing mechanism according to the second aspect of the invention, the wall face of the mounting hole formed in the dynamic vibration absorbing member is contacted with the circumference of the elastic member, so that the mount member and the dynamic vibration absorbing member are resiliently connected. Furthermore, the concave portion formed on the wall face of the mounting hole weakens or releases the restraint of the elastic member, making it possible to vary the resonance vibration frequency in a direction where the concave portion is formed or the direction where the restraint is weakened. Thereby, the vibration absorbing mechanism can be provided to allow the fast reading (writing) to be made more stably than conventionally.

With the vibration absorbing mechanism according to the third aspect of the invention, the wall face of the mounting hole formed in the dynamic vibration absorbing member is contacted with the circumference of the elastic member, so that the mount member and the dynamic vibration absorbing member are resiliently connected. Furthermore, the projection portion formed on the wall face of the mounting hole acts as the restraint changing member for restraining the surface of the elastic member partially strongly, making it possible to vary the resonance vibration frequency in a specific direction where the restraint is strengthened. Thereby, the vibration suppressing effect can be easily set in the specific direction, and the vibration absorbing mechanism can be provided to allow the fast reading (writing) to be made more stably than conventionally.

With the vibration absorbing mechanism according to the fourth aspect of the invention, the elastic member is accepted in the mounting hole formed in the dynamic vibration absorbing member and constrained by the wall face of the mounting hole, so that the mount member and the dynamic vibration absorbing member are resiliently connected. Furthermore, the recessed portion of the elastic member can release the restraint of the elastic member, acting as the restraint changing member that weakens the restraint in the recessed portion, making it possible to vary the resonance vibration frequency in a specific direction where the restraint is weakened. Thereby, the vibration suppressing effect can be easily set in the specific direction, and the vibration absorbing mechanism can be provided to allow the fast reading (writing) to be made more stably than conventionally.

With the vibration absorbing mechanism according to the fifth aspect of the invention, the wall face of the mounting hole formed in the dynamic vibration absorbing member is contacted with the circumference of the elastic member, so that the mount member and the dynamic vibration absorbing member are resiliently connected. Furthermore, the elastic projection portion formed on the outer circumferential face of the elastic member acts as the restraint changing member for partially restraining the elastic member itself strongly, making it possible to vary the resonance vibration frequency in a specific direction where the restraint is strengthened. Thereby, the vibration suppressing effect can be easily set in the specific direction without using the complex constitution, and the vibration absorbing mechanism can be provided to allow the fast reading (writing) to be made more stably than conventionally.

With the vibration absorbing mechanism according to the sixth aspect of the invention, the elastic member is almost cylindrical, and attached by the fixing member passing through the central portion, whereby the fixing direction of the elastic member to the mount member is selectable. Hence, the position of restraint changing member formed in the elastic member can be chosen so that the resonance vibration frequency can be varied at will in the direction. Thereby, the vibration suppressing effect can be easily set in the specific direction, and the vibration absorbing mechanism can be provided to allow the fast reading (writing) to be made more stably than conventionally.

## Claims

1. A vibration absorbing mechanism for a recording/reproducing device having:
a drive member (6) for driving rotation of an information recording medium (10);
an information reading member (5) for reading the information of the information recording medium (10); and
a mount member (4) for mounting said drive member (6) and said information reading member (5);
the vibration absorbing mechanism comprising:
dynamic vibration absorbing member (14), connected to the mount member (4) via an elastic member (21,31,41), for attenuating the vibration of said mount member (4): wherein said dynamic vibration absorbing member (14) is provided with a wall face (24a,54a,64a,74a,84a) that radially constrains an outer circumferential face (21a,31a,41a) of said elastic member (21,31,41);
**characterised in that** the dynamic vibration absorbing member (14) or the elastic member (21, 31, 41) further comprise means (25,55,65,75,32,42) for altering the restraining force between said wall face and said outer circumferential face in a predetermined radial direction, without affecting the restraining force in directions other than the predetermined radical direction.

2. The vibration absorbing mechanism according to claim 1, wherein
said dynamic vibration absorbing member (14) is provided with a mounting hole (24,64) for accepting said elastic member (21), and
said restraining force altering means is a concave portion (25,65) of the mounting hole (24,64) on the wall face (24a,64a).

3. The vibration absorbing mechanism according to claim 1, wherein
said dynamic vibration absorbing member (14) is provided with a mounting hole (54,74) for accepting said elastic member (21), and
said restraining force altering means is a projection portion (55,75) of the mounting hole (54,74) on the wall face (54a,74a).

4. The vibration absorbing mechanism according to claim 1, wherein
said dynamic vibration absorbing member (14) is provided with a mounting hole (84) for accepting said elastic member (39), and
said restraining force altering means is a recessed portion (32) of said elastic member (31).

5. The vibration absorbing mechanism according to claim 1, wherein
said dynamic vibration absorbing member (14) is provided with a mounting hole (84) for accepting said elastic member (41), and
said restraining force altering means is an elastic projection portion (42) of said elastic member (41).

6. The vibration absorbing mechanism according to claim 4, wherein
said elastic member (31) is almost cylindrical, in which a fixing direction of said elastic member (31) to said mount member (4) is selectable by a fixing member (22) passing through a central portion (31b).

7. The vibration absorbing mechanism according to claim 5, wherein
said elastic member (41) is almost cylindrical, in which a fixing direction of said elastic member (41) to said mount member (4) is selectable by a fixing member (22) passing through a central portion (41b).

## Patentansprüche

1. Vibrationsdämpfungsvorrichtung für eine Aufzeichnungs-/Wiedergabevorrichtung, die aufweist:
ein Antriebselement (6) zur Antriebsrotation eines Informationsaufzeichnungsmediums (10);
ein Informationsleseelement (5) zum Lesen der auf dem Informationsaufzeichnungselement (10) gespeicherten Informationen; und
ein Trägerelement (4) zur Befestigung des Antriebselements (6) und des Informationsleseelements (5);
wobei die Vibrationsdämpfungsvorrichtung umfasst:
ein dynamisches Vibrationdämpfungselement (14), welches mittels eines elastischen Elements (21, 31, 41) mit dem Trägerelement (4) verbunden ist, um die Vibration des Trägerelements (4) zu reduzieren: und wobei das dynamische Vibrationsdämpfungselement (14) mit einer Wandfläche (24a, 54a, 64a, 74a, 84a) vorgesehen ist, die eine Aussenumfangsfläche (21a, 31a, 41a) des elastischen Elements (21, 31, 41) radial einspannt;
**dadurch gekennzeichnet, dass** das dynamische Vibrationsdämpfungselement (14) oder das elastische Element (21, 31,41) desweiteren zur Ableitung der zurückhaltenden Kraft, die zwischen der Wandfläche und der Aussenumfangsfläche in einer vorgegebenen radialen Richtung auftritt, Einrichtungen (25, 55, 65, 75, 32, 32, 42) umfassen, ohne die zurückhaltende Kraft in anderen Richtungen als die vorgegebene radiale Richtung zu beeinflussen.

2. Vibrationsdämpfungsvorrichtung nach Anspruch 1, wobei
das dynamische Vibrationsdämpfungselement (14) mit einem Montageloch (24, 46) versehen ist, um das elastische Element (21) aufzunehmen und
die zurückhaltende Kraftableitungseinrichtung ein konkaver Abschnitt (25, 65) des Montagelochs (24, 64) in der Wandfläche (24a, 64a) ist.

3. Vibrationsdämpfungsvorrichtung nach Anspruch 1, wobei
das Vibrationsdämpfungselement (14) mit einem Montageloch (54, 74) zur Aufnahme des elastischen Elements (21) vorgesehen ist und
die zurückhaltende Kraftableitungseinrichtung ein herausragender Abschnitt (55, 75) des Montagelochs (54, 74) in der Wandfläche (54a, 74a) ist.

4. Vibrationsdämpfungsvorrichtung nach Anspruch 1, wobei
das dynamische Vibrationsdämpfungselement (14) mit einem Montageloch (84) zur Aufnahme des elastischen Elements (39) vorgesehen ist und
die zurückhaltende Kraftableitungseinrichtung eine Aussparung (32) des elastischen Elements (31) ist.

5. Vibrationsdämpfungsvorrichtung nach Anspruch 1, wobei
das dynamische Vibrationsdämpfungselement (14) mit einem Montageloch (84) zur Aufnahme des elastischen Elements (41) vorgesehen ist und
die zurückhaltende Kraftableitungseinrichtung ein elastischer herausragender Abschnitt (42) des elastischen Elements (41) ist.

6. Vibrationsdämpfungsvorrichtung nach Anspruch 4, wobei
das elastische Element (31) beinahe zylindrisch ist, bei dem eine Befestigungsrichtung des elastischen Elements (31) auf das Trägerelement (4) über ein Befestigungselement (22) wählbar ist, das durch einen Zentralabschnitt (31b) hindurchführt.

7. Vibrationsdämpfungsvorrichtung nach Anspruch 5, wobei
das elastische Element (41) beinahe zylindrisch ist, bei dem eine Befestigungsrichtung des elastischen Elements (41) auf das Trägerelement (4) über ein Befestigungselement (22) wählbar ist, das durch einen Zentralabschnitt (41b) hindurchführt.

## Revendications

1. Mécanisme d'amortissement des vibrations pour un dispositif d'enregistrement/reproduction ayant :
un élément d'entraînement (6) destiné à entraîner en rotation un support d'enregistrement d'information (10);
un élément de lecture d'information (5) destiné à lire l'information du support d'enregistrement d'information (10); et
un élément de montage (4) destiné à monter ledit élément d'entraînement (6) et ledit élément de lecture d'information (5);
le mécanisme d'amortissement des vibrations comportant :
un élément d'amortissement des vibrations dynamique (14), relié à l'élément de montage (4) par l'intermédiaire d'un élément élastique (21, 31, 41), afin d'atténuer la vibration dudit élément de montage (4); ledit élément d'amortissement des vibrations dynamique (14) étant pourvu d'une face de paroi (24a, 54a, 64a, 74a, 84a) qui retient radialement une face circonférentielle externe (21a, 31a, 41a) dudit élément élastique (21, 31, 41);
**caractérisé en ce que** l'élément d'amortissement des vibrations dynamique (14) ou l'élément élastique (21, 31, 41) comprend en outre des moyens (25, 55, 65, 75, 32, 42) destinés à modifier la force de retenue entre ladite face de paroi et ladite face circonférentielle externe dans une direction radiale prédéterminée, sans affecter la force de retenue dans des directions autres que la direction radiale prédéterminée.

2. Mécanisme d'amortissement des vibrations selon la revendication 1, dans lequel :
ledit élément d'amortissement de vibrations dynamique (14) est pourvu d'un trou de montage (24, 64) destiné à accepter ledit élément élastique (21), et
ledit élément de modification de force de retenue est une partie concave (25, 65) du trou de montage (24, 64) sur la face de paroi (24a, 64a).

3. Mécanisme d'amortissement des vibrations selon la revendication 1, dans lequel :
ledit élément d'amortissement de vibrations dynamique (14) est pourvu d'un trou de montage (54, 74) destiné à accepter ledit élément élastique (21), et
ledit élément de modification de force de retenue est une partie saillante (55, 75) du trou de montage (54, 74) sur la face de paroi (54a, 74a).

4. Mécanisme d'amortissement des vibrations selon la revendication 1, dans lequel :
ledit élément d'amortissement de vibrations dynamique (14) est pourvu d'un trou de montage (84) destiné à accepter ledit élément élastique (39), et
ledit élément de modification de force de retenue est une partie renfoncée (32) dudit élément élastique (31).

5. Mécanisme d'amortissement des vibrations selon la revendication 1, dans lequel :
ledit élément d'amortissement de vibrations dynamique (14) est pourvu d'un trou de montage (84) destiné à accepter ledit élément élastique (41), et
ledit élément de modification de force de retenue est une partie de saillie élastique (42) dudit élément élastique (41).

6. Mécanisme d'amortissement des vibrations selon la revendication 4, dans lequel :
ledit élément élastique (31) est pratiquement cylindrique, dans lequel une direction de fixation dudit élément élastique (31) sur ledit élément de montage (4) peut être sélectionnée grâce à un élément de fixation (22) passant à travers une partie centrale (31b).

7. Mécanisme d'amortissement des vibrations selon la revendication 5, dans lequel :
ledit élément élastique (41) est pratiquement cylindrique, dans lequel une direction de fixation dudit élément élastique (41) sur ledit élément de montage (4) peut être sélectionnée grâce à un élément de fixation (22) passant à travers une partie centrale (41b).
